# EUROPEAN PATENT APPLICATION

(11) **EP 3 916 648 A1**
(43) Date of publication of application: **01.12.2021**
(21) Application number: 21175578.0
(22) Date of filing: 25.05.2021
(51) Int. Cl.: G06Q 10/00

(54) **SERVER DEVICE, INFORMATION PROCESSING SYSTEM, NON-TRANSITORY STORAGE MEDIUM, CONTROL DEVICE, VEHICLE, AND OPERATION METHOD OF INFORMATION PROCESSING SYSTEM**

(30) Priority: 29.05.2020 JP 2020094754
(71) Applicant: TOYOTA JIDOSHA KABUSHIKI KAISHA, Toyota-shi, Aichi-ken 471-8571 (JP)
(72) Inventor: ANDOU, Tsuyoshi, Toyota-shi, Aichi-ken 471-8571 (JP); JIKUMARU, Akitoshi, Toyota-shi, Aichi-ken 471-8571 (JP); KOBAYASHI, Ryosuke, Toyota-shi, Aichi-ken 471-8571 (JP); MAYA, Tomokazu, Toyota-shi, Aichi-ken 471-8571 (JP); HAYASHI, Masatoshi, Toyota-shi, Aichi-ken 471-8571 (JP)
(74) Representative: Cabinet Beau de Loménie

(57) **Abstract**

A server device (10) includes: a communication module; and one or more processors configured to perform communication with an outside of the server device (10) via the communication module, receive, from a vehicle (13), information relating to a maintenance state of the vehicle (13), and transmit at least one of information on usage permission of the vehicle (13) or information on a request for maintenance of the vehicle (13), to one or more terminal devices (11, 12), in accordance with the maintenance state.

## Description

### BACKGROUND OF THE INVENTION

### 1. Field of the Invention

The present disclosure relates to a server device, an information processing system, a non-transitory storage medium, a control device, a vehicle, and an operation method of information processing system.

### 2. Description of Related Art

Various technologies have been proposed to support managing of a shared vehicle in so-called car sharing, in which a plurality of users share a vehicle. For example, WO 2016/075808 discloses a shared vehicle management device that accepts usage requests for a shared vehicle.

### SUMMARY OF THE INVENTION

There is room for improvement in management of shared vehicles.

A server device, an information processing system, a non-transitory storage medium, a control device, a vehicle, and an operation method of the information processing system, which can improve management of shared vehicles, will be disclosed below.

A server device according to a first aspect of the present disclosure includes: a communication module; and one or more processors configured to perform communication with an outside of the server device via the communication module, receive, from a vehicle, information relating to a maintenance state of the vehicle, and transmit at least one of information on usage permission of the vehicle or information on a request for maintenance of the vehicle, to one or more terminal devices, in accordance with the maintenance state.

An information processing system according to a second aspect of the present disclosure includes: the server device in the above first aspect; and the vehicle.

An information processing system according to a third aspect of the present disclosure includes: the server device in the above first aspect; and the one or more terminal devices.

A non-transitory storage medium according to a fourth aspect of the present disclosure stores: instructions that are executable by one or more second processors and that cause the one or more second processors to perform functions as the one or more terminal in the above first aspect.

A control device according to a fifth aspect of the present disclosure includes: a communication module; and one or more processors configured to perform communication with an outside of the vehicle via the communication module, and transmit information relating to a maintenance state of the vehicle to a server device, the server device being configured to transmit, on a basis of the information relating to the maintenance state of the vehicle, at least one of information on usage permission of the vehicle or information on a request for maintenance of the vehicle to one or more terminal devices.

A vehicle according to a sixth aspect of the present disclosure includes: a control device in the above fifth aspect.

An operation method of an information processing system having a server device and a vehicle, configured to be mutually communicable, according to a seventh aspect of the present disclosure, includes: transmitting, the vehicle, information relating to a maintenance state of the vehicle to the server device; and transmitting, the server device, at least one of information on usage permission of the vehicle or information on a request for maintenance of the vehicle, to one or more terminal devices, in accordance with the maintenance state.

According to the server device, the information processing system, the non-transitory storage medium, the control device, the vehicle, and the operation method of the information processing system of the present disclosure, management of shared vehicles can be improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating a configuration example of an information processing system;
FIG. 2 is a diagram illustrating a configuration example of a server device;
FIG. 3 is a diagram illustrating a configuration example of a terminal device;
FIG. 4 is a diagram illustrating a configuration example of a vehicle;
FIG. 5 is a sequence diagram illustrating an operation example of the information processing system;
FIG. 6 is a sequence diagram illustrating an operation example of the information processing system;
FIG. 7 is a diagram illustrating an output example of a terminal device;
FIG. 8 is a sequence diagram illustrating an operation example of the information processing system; and
FIG. 9 is a sequence diagram illustrating an operation example of the information processing system.

### DETAILED DESCRIPTION OF EMBODIMENTS

An embodiment will be described below.

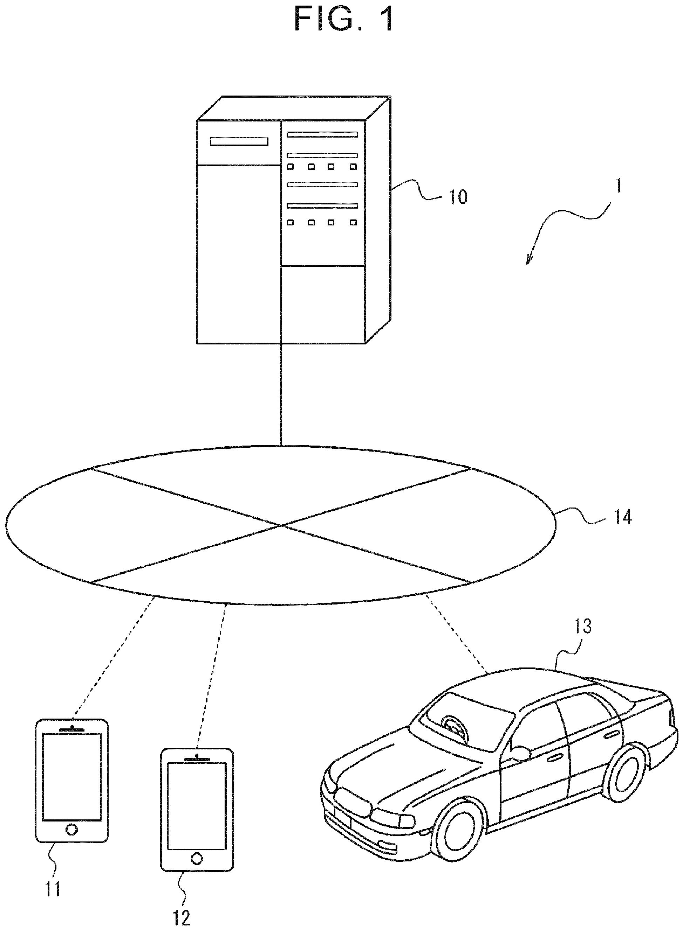

FIG. 1 is a diagram illustrating a configuration example of an information processing system according to an embodiment. The information processing system 1 includes a server device 10, terminal devices 11 and 12, and a vehicle 13, which are connected to each other via a network 14, so as to be capable of communication of information, for example. The server device 10 is a computer. The terminal devices 11 and 12 are transportable information terminal devices such as smartphones, tablet terminal devices, and so forth, but may be personal computers (PC). The vehicle 13 is a passenger car, a multipurpose vehicle, or the like, having control and communication functions, and is provided as a shared vehicle for car sharing. The network 14 is the Internet, for example, but may be an ad hoc network, a local area network (LAN), a metropolitan area network (MAN), other networks, or a combination of any thereof. The number of the components that the information processing system 1 has may be greater than shown here.

In the present embodiment, the information processing system 1 supports management of the vehicle 13 serving as a shared vehicle in car sharing. The server device 10 receives, from the vehicle 13, information regarding the maintenance state of the vehicle 13, and sends one or both of a usage permission of the vehicle 13 and a maintenance request for the vehicle 13 to the terminal devices 11 or 12, in accordance with the maintenance state. For example, the terminal device 11 is used by a user of the vehicle 13. When the maintenance state of the vehicle 13 is at a level at which the vehicle 13 is usable, the server device 10 sends a permission to use the vehicle 13 to the terminal device 11 of the user. The user uses and drives the vehicle 13 based on the usage permission sent to the terminal device 11. Also, the terminal device 12 is used by one who undertakes maintenance of the vehicle 13 (hereinafter referred to as a "maintenance person"). When the maintenance state of the vehicle 13 is at a level at which the vehicle 13 requires maintenance, the server device 10 sends a maintenance request for the vehicle 13 to the terminal device 12 of the maintenance person. The maintenance person performs maintenance of the vehicle 13 based on the request sent to the terminal device 12. The maintenance person may be the user of the vehicle 13, but it is sufficient for the maintenance person to be one who desires to perform maintenance of the vehicle without needing to use the vehicle when requested to perform maintenance. According to the present embodiment, maintenance of the vehicle 13 can be performed using services provided by the maintenance person, while managing permission for users to use the vehicle 13. Accordingly, management including maintenance of the vehicle 13 can be improved.

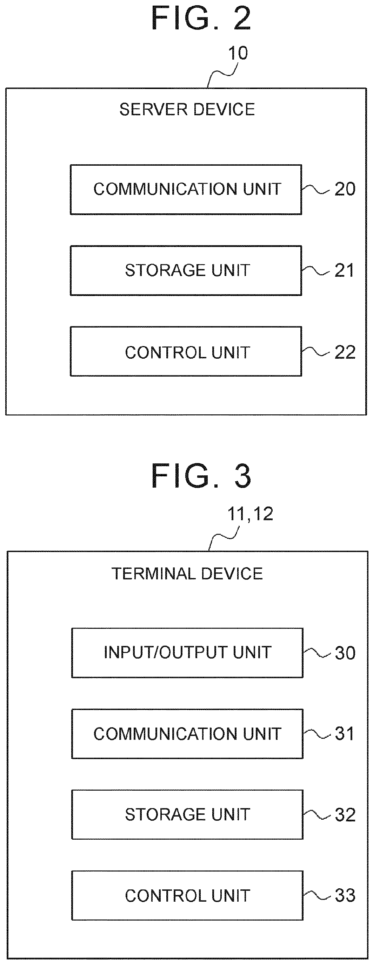

FIG. 2 illustrates a configuration example of the server device 10. The server device 10 has a communication unit 20, a storage unit 21, and a control unit 22. The server device 10 may execute operations in the present embodiment by communicating and collaborating with other server devices having equivalent configurations.

The communication unit 20 has a communication module that handles one or more wired or wireless LAN standards, in order to connect to the network 14. The server device 10 is connected to the network 14 via the communication unit 20 and performs communication of information with other devices via the network 14 in the present embodiment.

The storage unit 21 has semiconductor memory, magnetic memory, optical memory, or the like, for example. The storage unit 21 functions as a main storage device, an auxiliary storage device, or cache memory, for example. The storage unit 21 stores optional information, control and processing programs, and so forth, used in operations of the server device 10.

The control unit 22 has one or more general-purpose processors such as a central processing unit (CPU) or the like, or one or more dedicated processors specialized for particular processing, for example. Alternatively, the control unit 22 may have one or more dedicated circuits such as a field-programmable gate array (FPGA), an application specific integrated circuit (ASIC), or the like. The control unit 22 centrally controls operations of the server device 10 by operating in accordance with control and processing programs, following operation procedures implemented as circuits, and so forth. The control unit 22 also exchanges various types of information with the terminal device 12 and the vehicle 13 via the communication unit 20, thereby executing operations according to the present embodiment.

FIG. 3 illustrates a configuration example of the terminal device 11. The configuration example of the terminal device 11 described here is also applied to the terminal device 12. The terminal device 11 is an information terminal device such as a smartphone, a table terminal device, a PC, or the like, for example. The terminal device 11 has an input/output unit 30, a communication unit 31, a storage unit 32, and a control unit 33.

The input/output unit 30 has an input interface that detects user input and sends input information to the control unit 33. This input interface is an unprescribed input interface, including, for example, physical keys, capacitive keys, a touchscreen integrally provided with a panel display, various types of pointing devices, a microphone that accepts audio input, a camera that captures taken images or image codes, and so forth. The input/output unit 30 also has an output interface that outputs information generated by the control unit 33, received from other devices, and so forth, to the user. This output interface is an unprescribed output interface, including, for example, an external or built-in display that outputs information as images or video, a speaker that outputs information as audio, and a connection interface for connection with an external output device.

The communication unit 31 has a communication module that handles a wired or wireless LAN standard, a module that handles a mobile communication standard such as 4th Generation (4G), 5th Generation (5G), and so forth, or the like. The terminal device 11 is connected to the network 14 by the communication unit 31, via a nearby router device, or a mobile communication base station, and performs communication of information with other devices via the network 14.

The storage unit 32 has semiconductor memory, magnetic memory, optical memory, or the like, for example. The storage unit 32 functions as a main storage device, an auxiliary storage device, or cache memory, for example. The storage unit 32 stores optional information, control and processing programs, and so forth, used in operations of the terminal device 11.

The control unit 33 has one or more general-purpose processors such as a CPU, a micro processing unit (MPU), or the like, or one or more dedicated processors specialized for particular processing, for example. Alternatively, the control unit 33 may have one or more dedicated circuits such as an FPGA, an ASIC, or the like. The control unit 33 centrally controls operations of the terminal device 11 by operating in accordance with control and processing programs, operating following operation procedures implemented as circuits, and so forth. The control unit 33 exchanges various types of information with the server device 10 and so forth via the communication unit 31, thereby executing operations according to the present embodiment.

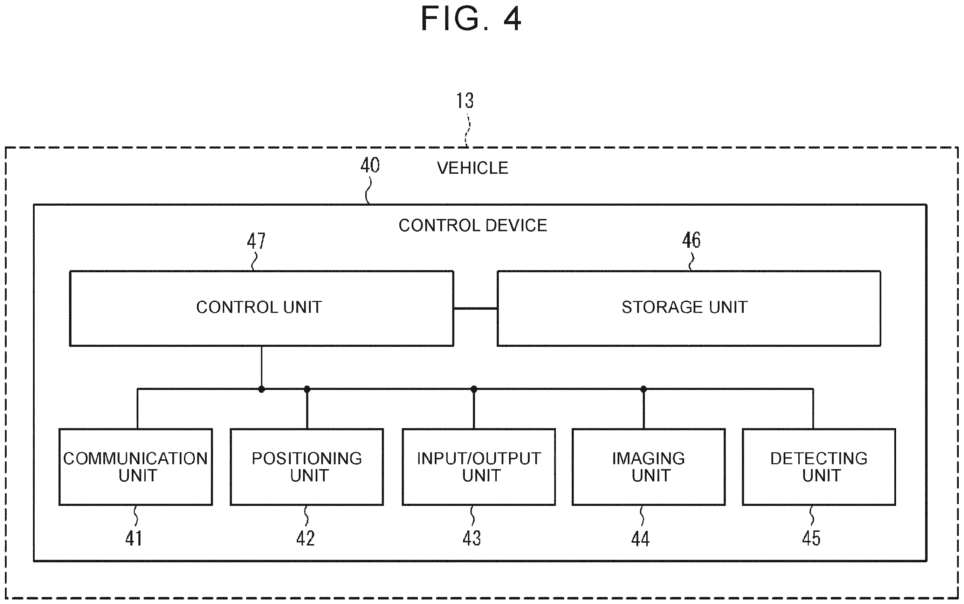

FIG. 4 illustrates a configuration example of a control device 40 installed in the vehicle 13. The control device 40 has a communication unit 41, a positioning unit 42, an input/output unit 43, an imaging unit 44, a detecting unit 45, a storage unit 46, and a control unit 47. The control device 40 is an automotive navigation system, a cellular telephone, a smartphone, a table, or a PC, for example. Note that the vehicle 13 may be driven by a driver, or by automated driving at an optional level of automation. The level of automation is one of Level 1 through Level 5 according to levels of autonomy set forth by the Society of Automotive Engineers (SAE), for example.

The communication unit 41 includes one or more communication interfaces. The communication interface is an interface that handles a mobile communication standard such as Long-Term Evolution (LTE), 4G, 5G, or the like, for example. The communication unit 41 receives information used in operations of the control device 40 and transmits information obtained by operations of the control device 40. The control device 40 is connected to the network 14 via a mobile communication base station by the communication unit 41, and performs communication of information with other devices via the network 14.

The positioning unit 42 includes one or more global navigation satellite system (GNSS) receivers. Examples of GNSSs include at least one of the Global Positioning System (GPS), Quasi-Zenith Satellite System (QZSS), Global Navigation Satellite System (GLONASS), and Galileo. The positioning unit 42 acquires position information on the vehicle 13.

The input/output unit 43 has one or more input interfaces and one or more output interfaces. The input interface is, for example, physical keys, capacitive keys, a pointing device, a touchscreen integrally provided with a display, or a microphone that accepts audio input. The output interface is a display or a speaker, for example. The display is, for example, a liquid-crystal display (LCD) or an organic electroluminescent (EL) display. The input/output unit 43 accepts operations of inputting information used for operations of the control device 40, sends input information to the control unit 47, outputs information obtained by operations of the control device 40, and so forth.

The imaging unit 44 has one or more cameras and control circuits thereof, provided at a position where images of the surroundings of the vehicle 13 or inside of the vehicle cabin can be taken. The camera that the imaging unit 44 has may be a monocular camera or may be a stereo camera. The imaging unit 44 takes images of the surroundings of the vehicle 13 or inside of the vehicle cabin thereof at optional time intervals, and sends the taken images to the control unit 47. Information on sound at the surroundings of the vehicle 13 or inside of the vehicle cabin, acquired from the input interface of the input/output unit 43 may be correlated with the taken images.

The detecting unit 45 has sensors that detect the state of the vehicle 13. The sensors include sensors that detect the tilt of the vehicle 13, air pressure of the tires, the state of the atmosphere in the vehicle cabin, such as humidity and smell, and so forth, for example. The detecting unit 45 detects information indicating the state of the vehicle 13 by the sensors, and sends this information to the control unit 47.

The storage unit 46 includes one or more semiconductor memory devices, one or more magnetic memory devices, one or more optical memory devices, or a combination of at least two or more types thereof. Examples of semiconductor memory include random access memory (RAM) and read-only memory (ROM). Examples of RAM include static RAM (SRAM) and dynamic RAM (DRAM). An example of ROM is electrically erasable programmable ROM (EEPROM). The storage unit 46 functions as a main storage device, an auxiliary storage device, or cache memory, for example. The storage unit 46 stores information used in operations of the control device 40, and information obtained by operations of the control device 40.

The control unit 47 has one or more general-purpose processors such as a CPU, an MPU, or the like, or one or more dedicated processors specialized for particular processing. Alternatively, the control unit 47 may have one or more dedicated circuits such as an FPGA, an ASIC, or the like. The control unit 47 centrally controls operations of the control device 40 and the vehicle 13 by operating in accordance with control and processing programs, operating following operation procedures implemented as circuits, and so forth. The control unit 47 exchanges various types of information with the server device 10 via the communication unit 41, thereby executing operations according to the present embodiment.

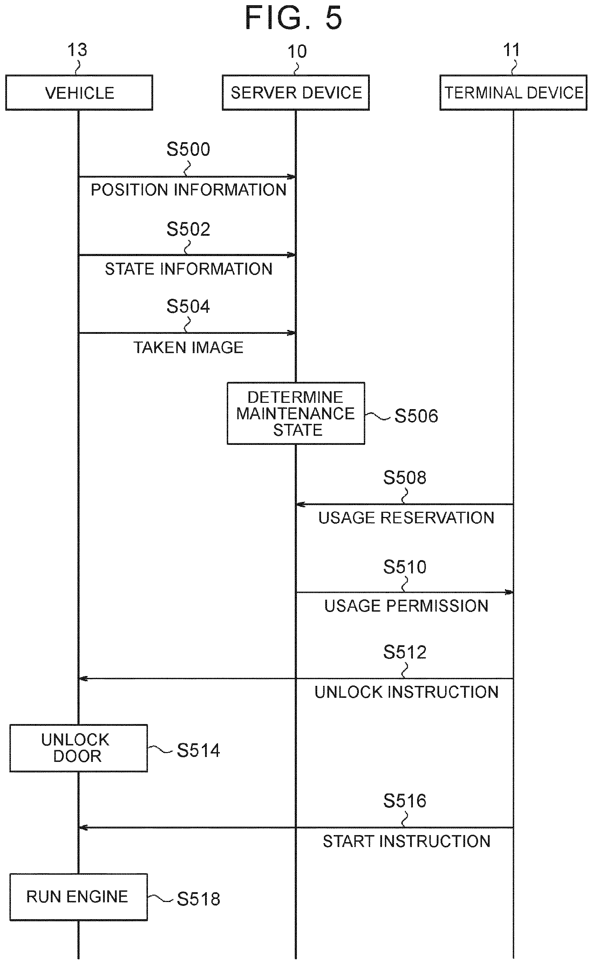

FIG. 5 is a sequence diagram illustrating an operation example of the information processing system 1. FIG. 5 illustrates operation procedures of cooperative operations by the server device 10, the terminal device 11, and the vehicle 13. The procedures in FIG. 5 are procedures executed from a point in time of the vehicle 13 finishing traveling and reaching a predetermined parking spot, and being in a parked state thereafter, when a user makes a reservation by the terminal device 11 to use the vehicle 13, for example.

In step S500, the vehicle 13 sends position information to the server device 10. The control unit 47 of the vehicle 13 sends the current position of the vehicle 13 acquired from the positioning unit 42 to the server device 10 via the communication unit 41. The control unit 22 of the server device 10 receives the position information via the communication unit 20, and stores the position information in the storage unit 21. Step S500 is executed when the control unit 47 does not detect change in position information on the vehicle 13 for a predetermined time (e.g., several tens of seconds) or more for example, i.e., when the probability that the vehicle 13 will be parked is high.

In step S502, the vehicle 13 sends state information indicating the state of the vehicle 13 to the server device 10. State information is information indicating, for example, the tilt of the vehicle 13, air pressure of the tires, the state and so forth of the atmosphere in the vehicle cabin, or the like, detected by the detecting unit 45 of the vehicle 13. The control unit 47 of the vehicle 13 sends the state information to the server device 10 via the communication unit 41. The control unit 22 of the server device 10 receives the state information via the communication unit 20 and stores the state information in the storage unit 21.

In step S504, the vehicle 13 sends a taken image to the server device 10. The control unit 47 of the vehicle 13 sends a taken image, including part of the exterior of the vehicle body or inside the vehicle cabin of the vehicle 13, that the imaging unit 44 has taken, to the server device 10 via the communication unit 41. The control unit 22 of the server device 10 receives the taken image via the communication unit 20 and stores the taken image in the storage unit 21.

In step S506, the server device 10 determines the maintenance state of the vehicle 13 based on the state of the vehicle 13 or change over time in taken images. For example, the control unit 22 of the server device 10 stores past state information and past taken images associated with identification information for each vehicle 13 in the storage unit 21, and detects change over time a predetermined time intervals of states or taken images. The time intervals are elapsed time or the like from the point in time that state information or the like was acquired from the vehicle 13 the previous time, such as several hours to several tens of hours. Also, identification information on the vehicle 13 is acquired in order to establish communication with the vehicle 13, for example.

When change over time satisfies a predetermined standard, the control unit 22 recognizes necessity for maintenance. For example, when the tilt of the vehicle 13 is greater than a standard, or the air pressure of the tires has decreased beyond a standard, the probability of low tire pressure is recognized, and accordingly the necessity of maintenance which is to adjust the air pressure of the tires is recognized. Also, when the humidity or smell inside of the vehicle cabin of the vehicle 13 satisfies a standard indicating discomfort, for example, the necessity of maintenance which is to ventilate or to clean is recognized. Further, when there is a taken image of the exterior or the interior of the vehicle 13 that shows soiling or damage, for example, the necessity of maintenance which is to clean or perform repair work is recognized. The control unit 22 then ranks the maintenance state in accordance with necessity for maintenance classified in advance. Ranking is performed such that, for example, when air pressure adjustment is necessary, this is ranked as being a maintenance-necessary state of a level that would cause trouble in using the vehicle 13 (referred to as "unusable rank" for the sake of convenience). When cleaning or repair of the exterior or the interior is necessary, or ventilation is necessary, this is ranked as being a maintenance state in which there is no trouble in using the vehicle 13 but maintenance is necessary (referred to as "maintenance-necessary rank"). Another rank is when no need for maintenance is recognized, and there is no trouble in using the vehicle 13 (referred to as "maintenance-unnecessary rank"). Note that the standards for ranking may be optionally subdivided, such as damage to the exterior or the interior recognized from taken images is ranked as being a maintenance-necessary rank when the damage is no more than scuffs, but as an unusable rank when parts such as a mirror or the like are missing. Also, examples of maintenance states may include states other than the examples described here.

Step S508 and thereafter relate to procedures when the maintenance state of the vehicle 13 is ranked as being a maintenance-unnecessary rank.

In step S508, the terminal device 11 sends information for making a reservation to use the vehicle 13 to the server device 10. For example, the user accesses a portal site for members of a car sharing service that the server device 10 provides, using the terminal device 11. Attributes of the vehicle 13 such as the model, the location of the parking spot, and the maintenance state, for example, are displayed at the portal site. The user uses the terminal device 11 to input desired date and time of use, own membership ID, intent of desire to use, and so forth, and sends the input information to the server device 10 as usage reservation information. In the terminal device 11, the control unit 33 sends the information for the usage reservation to the server device 10 via the communication unit 31. The control unit 22 of the server device 10 receives the information for the usage reservation via the communication unit 20.

In step S510, the server device 10 sends the information for usage permission of the vehicle 13 to the terminal device 11. For example, authentication information for unlocking the doors of the vehicle 13, starting the engine, and so forth, from the terminal device 11, is included in the information for usage permission. The control unit 22 of the server device 10 sends the information for usage permission to the terminal device 11 via the communication unit 20. The control unit 33 of the terminal device 11 receives the information for usage permission via the communication unit 31.

When the user goes to the parking spot of the vehicle 13, in step S510, the terminal device 11 sends an unlock instruction to the vehicle 13. The control unit 33 of the terminal device 11 sends an unlock instruction, including the authentication information received from the server device 10, to the vehicle 13 via the communication unit 31, in response to user input of an instruction, for example. The control unit 47 of the vehicle 13 receives the unlock instruction via the communication unit 41.

In step S512, the vehicle 13 unlocks the doors in response to the unlock instruction. The control unit 47 of the vehicle 13 performs authentication processing regarding the authentication information included in the unlock instruction, and causes a door locking mechanism to unlock.

When the user enters the vehicle 13, in step S516 the terminal device 11 sends an engine start instruction to the vehicle 13. The control unit 33 of the terminal device 11 sends a start instruction, including the authentication information received from the server device 10, to the vehicle 13 via the communication unit 31, in response to user input of an instruction, for example. The control unit 47 of the vehicle 13 receives the start instruction via the communication unit 41.

In step S518, the vehicle 13 starts the engine in response to the start instruction. The control unit 47 of the vehicle 13 performs authentication processing regarding the authentication information included in the start instruction, and starts the engine. Thus, the user can use and drive the vehicle 13.

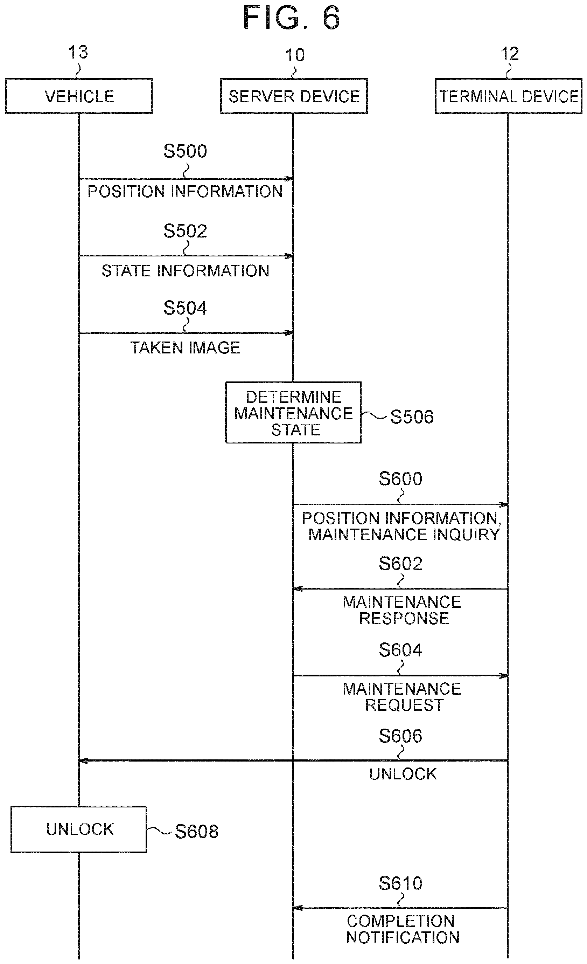

Next, FIG. 6 illustrates an operation example of the information processing system 1 when the vehicle 13 is ranked at the unusable rank. FIG. 6 illustrates operation procedures of cooperative operations by the server device 10, the terminal device 12, and the vehicle 13. The procedures in FIG. 6 are executed from a point in time of the vehicle 13 finishing traveling and reaching a parking spot and being in a parked state thereafter, for example. Steps S500 through S506 are in common with FIG. 5, and accordingly description of these steps will be omitted.

Step S600 and thereafter relate to procedures performed when the maintenance state of the vehicle 13 has been determined to be at the unusable rank in step S506.

In step S600, the server device 10 sends position information on the vehicle 13 and information on a maintenance inquiry to the terminal device 12. The information on the maintenance inquiry includes information relating to the maintenance state of the vehicle 13. At the server device 10, the control unit 22 sends the position information on the parking spot of the vehicle 13 and information on the maintenance inquiry to the terminal device 12 via the communication unit 20, and the control unit 33 of the terminal device 12 receives the position information and information on the maintenance inquiry via the communication unit 31. Then in step S602, the terminal device 12 sends a maintenance response, indicating intent to undertake maintenance of the vehicle 13, to the server device 10. The control unit 33 of the terminal device 12 sends a maintenance response to the server device 10 via the communication unit 31, and the control unit 22 of the server device 10 receives the maintenance response via the communication unit 20.

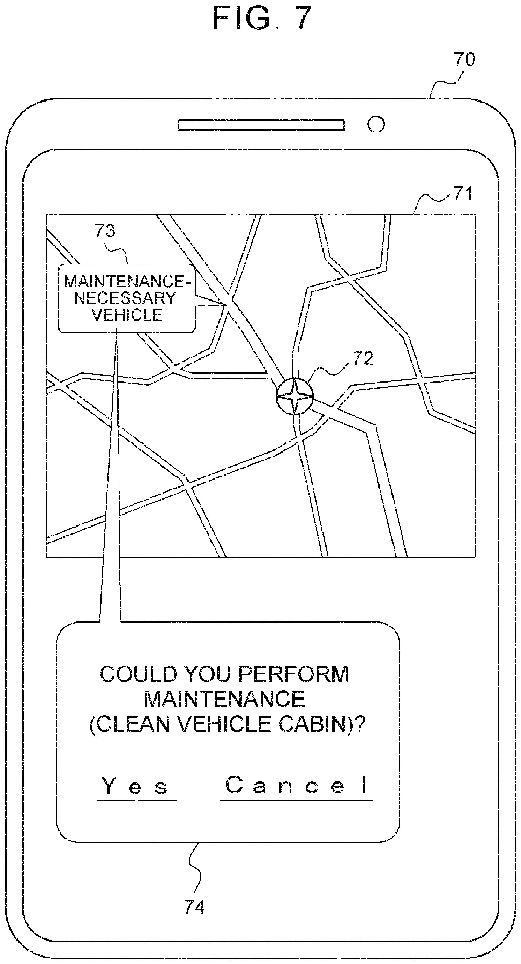

In steps S600 and S602, the maintenance person accesses the portal site for members of the car sharing service that the server device 10 provides using the terminal device 12, for example. The attributes of the vehicle 13 such as the model, the position information on the parking spot, the maintenance state, and so forth, for example, are displayed at the portal site, and further a message requesting maintenance of the vehicle 13 is displayed. The maintenance person uses the terminal device 12 to input the maintenance response and send the maintenance response to the server device 10. For example, FIG. 7 shows a displays screen example 70 of the terminal device 12 accessing the portal site. In this way, the position of the vehicle 13 is mapped on a map 71, and a message 73 indicating the existence of a vehicle that requires maintenance is displayed. A current position 72 of the terminal device 12 is also displayed on the map 71. When the maintenance person taps on the message 73, a separate message 74 showing information on the maintenance inquiry is displayed. When the maintenance person further taps on "Yes" in the message 74, a maintenance response is sent to the server device 10.

Returning to FIG. 6, in step S604 the server device 10 sends information on a maintenance request of the vehicle 13 to the terminal device 12. The information on the maintenance request includes predetermined information necessary of the maintenance person to carry out maintenance of the vehicle. Specifically, the information on the maintenance request includes information regarding the content of maintenance in accordance with the maintenance state, and also authentication information to unlock the doors of the vehicle 13 and so forth from the terminal device 12, for example. The control unit 22 of the server device 10 sends the information on the maintenance request to the terminal device 12 via the communication unit 20. The control unit 33 of the terminal device 12 receives the information on the maintenance request via the communication unit 31.

In step S602, when receiving a maintenance response from the terminal devices 12 of a plurality of maintenance persons via the portal site, the server device 10 can select a maintenance person near the parking spot of the vehicle 13 with priority, and send a maintenance request in step S604 to the selected terminal device 12. By the terminal device 12 sending position information on the terminal device 12 along with the maintenance response to the server device 10, for example, the control unit 22 of the server device 10 obtains the distance between the parking spot of the vehicle 13 and the current location of the terminal device 12, and selects the terminal device 12 regarding which the distance is the shortest. Alternatively, when the content of the maintenance is such that the maintenance can be performed by a plurality of maintenance persons, the predetermined number of maintenance persons may be selected in order of shortness of distance. In this case, step S604 and thereafter are executed with regard to a plurality of terminal devices 12.

When the maintenance person goes to the parking spot of the vehicle 13, in step S606, the terminal device 12 sends an unlock instruction to the vehicle 13. The control unit 33 of the terminal device 12 sends an unlock instruction, including the authentication information received from the server device 10, to the vehicle 13 via the communication unit 31. The control unit 47 of the vehicle 13 receives the unlock instruction via the communication unit 41.

In step S608, the vehicle 13 unlocks the doors in response to the unlock instruction. The control unit 47 of the vehicle 13 performs authentication processing regarding the authentication information included in the unlock instruction, and causes a door locking mechanism to unlock. Thus, the maintenance person can enter the vehicle 13 and perform necessary maintenance. Alternatively, when the object of maintenance is cleaning, repairing, or the like of the exterior, the maintenance person can perform maintenance from the outside without entering the vehicle 13.

When the maintenance ends, in step S610 the terminal device 12 sends a completion notification to the server device 10. The control unit 33 of the terminal device 12 sends the completion notification to the server device 10 via the communication unit 31 in response to input by the maintenance person. The control unit 22 of the server device 10 receives the completion notification via the communication unit 20.

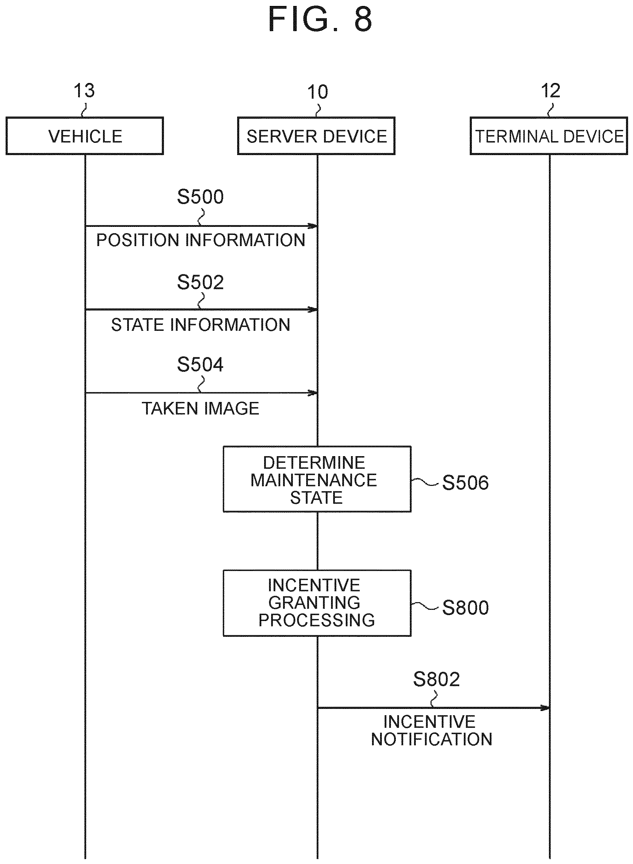

Next, FIG. 8 illustrates an operation example of the information processing system 1 when the maintenance person is granted an incentive in accordance with the maintenance state following performing maintenance of the vehicle 13. FIG. 8 illustrates operation procedures of cooperative operations by the server device 10, the terminal device 12, and the vehicle 13. The procedures in FIG. 8 are executed at a predetermined timing following the server device 10 receiving the maintenance completion notification from the terminal device 12, e.g., between parking of the vehicle 13 to the next operation. Steps S500 through S506 are in common with FIG. 5, and accordingly description of these steps will be omitted. Step S800 and thereafter relate to procedures when the maintenance state of the vehicle 13 is determined to be at the maintenance-necessary rank or maintenance-unnecessary rank in step S506, which is to say that the vehicle 13 is no longer at the unusable rank and is in a usable state as a result of maintenance.

In step S800, the server device 10 performs incentive granting processing to the maintenance person in accordance with the maintenance state of the vehicle 13. The incentive may be actual currency or virtual currency, or may be points or the like that have economic value. The control unit 22 of the server device 10 executes processing of granting points to a member's account that the maintenance person has acquired in advance, transfer of cash to a bank account, or the like, for example. The control unit 22 can correlatedly store the size of the incentive as to the degree of maintenance that has been assigned in advance in the storage unit 21, and grant an incentive of a magnitude corresponding to the maintenance state, for example.

In step S802, the server device 10 sends a notification to the terminal device 12 via the communication unit 20, indicating that incentive granting has been performed. The control unit 33 of the terminal device 12 receives the notification of incentive granting via the communication unit 31. The maintenance person can know of the incentive granting by the terminal device 12 outputting the notification of the incentive granting.

Executing this incentive granting enables the maintenance person to be prompted to cooperate in maintenance work. Note that when a plurality of maintenance persons perform maintenance, the incentive is apportioned in accordance with the number of maintenance persons, and incentive granting processing and grant notification are performed for each maintenance person.

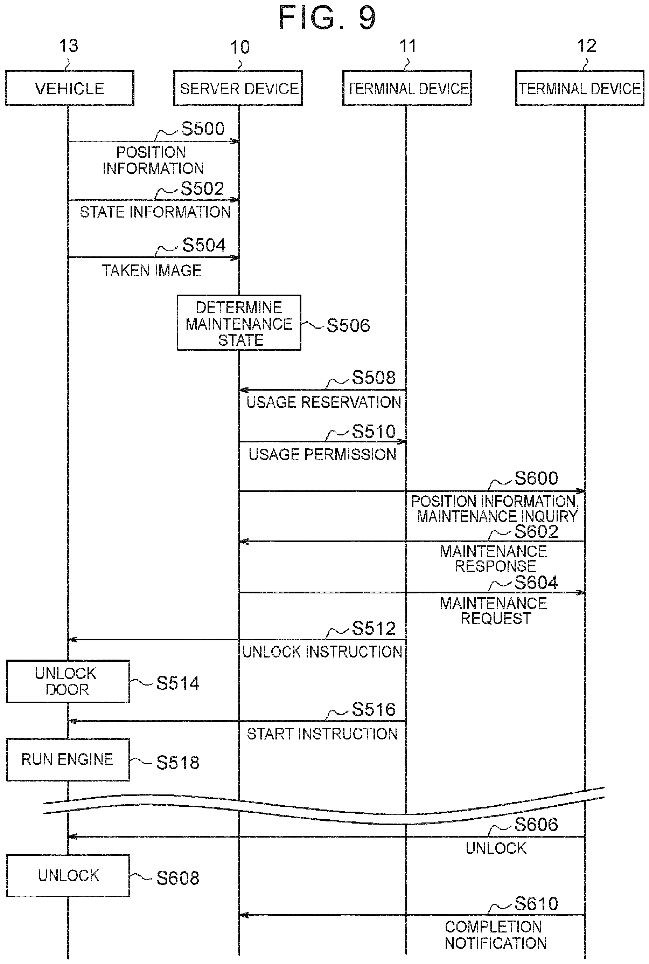

Next, FIG. 9 illustrates an operation example of the information processing system 1 when the vehicle 13 is ranked at the maintenance-necessary rank. FIG. 9 illustrates operation procedures of cooperative operations by the server device 10, the terminal devices 11 and 12, and the vehicle 13. The procedures in FIG. 9 are the procedures of FIGS. 5 and 6 combined. Steps that are the same as in FIGS. 5 and 6 are denoted by the same signs, and description will be omitted as appropriate.

The maintenance-necessary rank is a maintenance state in which there is no trouble in using the vehicle 13 but maintenance is necessary. Accordingly, when the server device 10 makes determination of maintenance-necessary rank in step S506, a user makes a usage reservation for the vehicle 13, and uses the vehicle 13. Also, in parallel with this, a maintenance request is sent to a maintenance person, and the maintenance person performs maintenance of the vehicle 13. Note however, that in the procedures in FIG. 9, when the user makes a usage reservation from the terminal device 11, information indicating the destination of travel by the vehicle 13 is sent to the server device 10. The server device 10 then makes a maintenance inquiry to the terminal device 12, and at the same time sends the position information on the destination instead of the current parking spot of the vehicle 13, as position information sent along with the maintenance inquiry. Further, the server device 10 may calculate the time at which the vehicle 13 will reach the destination based on map information, and send this time to the terminal device 12 along with the maintenance inquiry. Thus, the maintenance person can perform maintenance of the vehicle 13 after the vehicle 13 is used by the user and reaches the destination.

For example, when the server device 10 determines the maintenance state to be at the maintenance-necessary rank (S506), the terminal device 11 sends information on a usage reservation to the server device 10 (S508). Position information on the destination, dwell time, and so forth, are sent from the terminal device 11 to the server device 10 at this time. The server device 10 then sends information on usage permission to the terminal device 11 (S510). Subsequently, the server device 10 sends position information on the destination and information on a maintenance inquiry to the terminal device 12 (S600), and the terminal device 12 sends a maintenance response to the server device 10 (S602). Thereupon, the server device 10 sends a maintenance request to the terminal device 12 (S604). Next, exchange of information and processing relating to use of the vehicle 13 by the user are performed between the terminal device 11 and the vehicle 13 (steps S512, S514, S516, S518). When the vehicle 13 arrives at the destination, exchange of information and processing relating to maintenance of the vehicle 13 by the maintenance person are then performed between the terminal device 12 and the vehicle 13 (steps S606, S608).

According to such procedures in FIG. 9, through cooperative operations of the terminal device 11, the server device 10, and the vehicle 13, the user makes a usage reservation for the vehicle 13 and uses the vehicle 13, travels to the destination and parks the vehicle 13 at the destination. On the other hand, through cooperative operations of the terminal device 12, the server device 10, and the vehicle 13, the maintenance person performs maintenance on the vehicle 13 that has traveled to the destination and is parked there. According to these procedures in FIG. 9, a request of the user to use the vehicle 13 and necessity for maintenance of the vehicle 13 can be satisfied at the same time.

The procedures of FIG. 9 are not limited to when the user drops off the vehicle 13 at the destination, and are also applicable to situations in which the user uses the vehicle 13 to travel to a destination, and further plans to travel to a separate location. For example, maintenance of the vehicle 13 by the maintenance person can be completed while the user is staying at the destination, by the server device 10 acquiring planned activities of the user from the terminal device 11 along with the usage reservation, and sending the time at which the vehicle 13 will be staying at the destination to the terminal device 12 of the maintenance person along with the maintenance request. Accordingly, time of the maintenance person can be put to effective use, and also satisfaction of the user can be improved, while enabling the operation efficiency of the vehicle 13 to be improved.

As described above, according to the present embodiment, management of a shared vehicle can be improved.

In the above-described embodiment, the processing and control programs defining operations of the terminal devices 11 and 12 and the control device 40 may be stored in the storage unit 21 of the server device 10 or a storage unit of another server device, and downloaded to the devices via the network 14, or may be stored in a transportable and non-transitory recording/storage medium that is readable by the devices, and each device may read the programs from the medium.

Although the embodiment has been described above based on the drawings and examples, it should be noted that one skilled in the art can easily make various types of modifications and alterations based on the present disclosure. Accordingly, it should be noticed that all such modifications and alterations are encompassed by the scope of the present disclosure. For example, the functions and so forth included in the means, the steps, and so forth, may be rearranged insofar as there is no logical contradiction, and a plurality of means, steps, and so forth may be combined into one, or may be divided.

## Claims

1. A server device (10) comprising:
a communication module; and
one or more processors configured to
perform communication with an outside of the server device (10) via the communication module,
receive, from a vehicle (13), information relating to a maintenance state of the vehicle (13), and
transmit at least one of information on usage permission of the vehicle (13) or information on a request for maintenance of the vehicle (13), to one or more terminal devices (11, 12), in accordance with the maintenance state.

2. The server device (10) according to claim 1, wherein the one or more processors are configured to
transmit an inquiry for the maintenance to a plurality of the terminal devices (12) along with the information relating to the maintenance state, and
transmit the information on the request for the maintenance to a terminal device (12) responding to the inquiry out of the plurality of the terminal devices.

3. The server device (10) according to claim 2, wherein the one or more processors are configured to, when two or more terminal devices (12) out of the plurality of the terminal devices (12) respond to the inquiry, select a terminal device (12) to which the one or more processors transmit the information on the request for the maintenance on a basis of distance from each of the two or more terminal devices (12) to a parking spot of the vehicle (13).

4. The server device (10) according to claim 3, wherein the one or more processors are configured to, when transmitting both of the information on the usage permission and the request for the maintenance, transmit information on a destination of the vehicle (13) to the one or more terminal devices (11, 12) along with the information on the request for the maintenance.

5. The server device (10) according to any one of claims 1 to 4, wherein the information relating to the maintenance state includes at least one of information based on a taken image of the vehicle (13) or information on an atmosphere inside a vehicle cabin.

6. The server device (10) according to any one of claims 1 to 5, wherein the one or more processors are configured to perform processing of granting, to a user corresponding to a terminal device (12) to which the information on the request for the maintenance is transmitted out of the one or more terminal devices, an incentive corresponding to the maintenance state following the maintenance of the vehicle (13).

7. An information processing system comprising:
the server device (10) according to any one of claims 1 to 6; and
the vehicle (13).

8. An information processing system comprising:
the server device (10) according to any one of claims 1 to 6; and
the one or more terminal devices (11, 12).

9. A non-transitory storage medium storing instructions that are executable by one or more second processors and that, when executed by the one or more second processors, cause the one or more second processors to perform functions as the one or more terminal devices (11, 12) according to any one of claims 1 to 6.

10. A control device (40) installed in a vehicle (13) comprising:
a communication module; and
one or more processors configured to
perform communication with an outside of the vehicle (13) via the communication module, and
transmit information relating to a maintenance state of the vehicle (13) to a server device (10), the server device (10) being configured to transmit, on a basis of the information relating to the maintenance state of the vehicle (13), at least one of information on usage permission of the vehicle (13) or information on a request for maintenance of the vehicle (13) to one or more terminal devices (11, 12).

11. The control device (40) according to claim 10, wherein
the one or more processors are configured to transmit position information indicating a position of the vehicle (13) to the server device (10), and
the server device (10) is configured to decide a terminal device (12) to which to transmit the information on the request for the maintenance, on a basis of a distance from the terminal device (12) to a parking spot of the vehicle (13) based on the position information.

12. The control device (40) according to claim 10 or 11, wherein the information relating to the maintenance state includes at least one of information based on a taken image of the vehicle (13) or information on an atmosphere inside a vehicle cabin.

13. The control device (40) according to any one of claims 10 to 12, wherein the one or more processors are configured to perform processing to unlock the vehicle (13) in response to a request from a terminal device (11, 12) receiving the information on the usage permission or the information on the request for the maintenance.

14. A vehicle (13) comprising the control device (40) according to any one of claims 10 to 13.

15. An operation method of an information processing system having a server device (10) and a vehicle (13) configured to communicate mutually, the operation method comprising:
transmitting, by the vehicle (13), information relating to a maintenance state of the vehicle (13) to the server device (10); and
transmitting, by the server device (10), at least one of information on usage permission of the vehicle or information on a request for maintenance of the vehicle (13), to one or more terminal devices (11, 12), in accordance with the maintenance state.

16. The operation method according to claim 15, further comprising:
transmitting, by the server device, (10) an inquiry for the maintenance to a plurality of the terminal devices (12) along with the information relating to the maintenance state; and
transmitting, by the server device (10), the request for the maintenance to a terminal device (12) responding to the inquiry out of the plurality of the terminal devices (12).

17. The operation method according to claim 16, further comprising, when two or more terminal devices (12) out of the plurality of the terminal devices (12) respond to the inquiry, selecting, by the server device (10), a terminal device (12) to which the server device (10) transmit the information on the request for the maintenance on a basis of distance from each of the two or more terminal devices (12) to a parking spot of the vehicle (13).

18. The operation method according to claim 17, further comprising the server device (10) transmitting, when transmitting both of the information on the usage permission and the information on the request for the maintenance, a destination of the vehicle (13) to the terminal device (12) along with the request for the maintenance.

19. The operation method according to any one of claims 15 to 18, wherein the information relating to the maintenance state includes at least one of information based on a taken image of the vehicle (13) or information on an atmosphere inside a vehicle cabin.

20. The operation method according to any one of claims 15 to 19, further comprising the server device (10) performing processing of granting, to a user corresponding to a terminal device (12) to which the information on the request for the maintenance is transmitted out of the one or more terminal devices (12), an incentive corresponding to the maintenance state following the maintenance of the vehicle (13).
